# EUROPEAN PATENT APPLICATION

(11) **EP 4 664 498 A1**
(43) Date of publication of application: **17.12.2025**
(21) Application number: 25180781.4
(22) Date of filing: 04.06.2025
(51) Int. Cl.: H01G 11/18, H01G 11/74, H01G 11/82, H01G 11/84, H01M 50/169, H01G 2/10, H01G 11/78

(54) **A METHOD FOR WELDING AT LEAST ONE CELL COMPONENT TO AN ELECTRODE ASSEMBLY OF AN ENERGY STORAGE CELL**

(30) Priority: 11.06.2024 DE 102024116344
(71) Applicant: Skeleton Technologies GmbH, 04420 Markranstädt (DE)
(72) Inventor: Pärtin, Taavi, 11215 Tallinn (EE); Türke, Florian, 13351 Berlin (DE); Yildirim, Sinan, 10243 Berlin (DE); Mangels, Danny, 12107 Berlin (DE)
(74) Representative: KASTEL Patentanwälte PartG mbB

(57) **Abstract**

**In** order to improve thermo-electrical properties of energy storage cells, the invention proposes a method for welding at least one cell component (26) to an electrode assembly (18) of an energy storage cell (10), preferably a supercapacitor, the method comprising arranging each cell component (26) and the electrode assembly (18) in contact with each other, wherein each cell component (26) has an exposed welding surface (30) that is accessible for welding by a welding implement; moving the welding implement relative to the welding surface (30) to weld each cell component (26) to the electrode assembly (18) by forming a plurality of weld seams on the welding surface (30), wherein at least two of the formed weld seams are chosen from a group of weld seam types consisting of a transport weld seam that has a main directional component along a radial direction of the electrode assembly (18); and a collector weld seam (39) that has a main directional component along a circumferential direction of the electrode assembly (18).

## Description

The invention relates a method for welding at least one cell component to an electrode assembly of an energy storage cell, preferably a supercapacitor. The invention further relates to a weld seam arrangement obtained by welding, a method for manufacturing an energy storage cell, and an energy storage cell.

Energy storage cells as described herein may be classified into three varieties: batteries, capacitors, and ultracapacitors (sometimes also called supercapacitors). The term "battery" as used herein designates an energy storage cell that stores electrical energy exclusively by electrochemical redox reaction. While this typically also includes primary batteries that can only be discharged, the term "battery" as used herein exclusively designates a secondary battery, e.g., a battery that may be charged and discharged.

The term "capacitor" as used herein designates an energy storage cell that stores electrical energy electrostatically. The term "ultracapacitor" as used herein designates a special kind of capacitor and may be further distinguished into a double-layer capacitor (DLC), a pseudocapacitor, and a hybrid capacitor. The DLC stores energy electrostatically using a Helmholtz double layer. The pseudocapacitor stores electrical energy electrochemically by Faradaic electron charge-transfer such as intercalation or electrosorption. The hybrid capacitor uses both mechanisms of the DLC and the pseudocapacitor.

Ultracapacitors are becoming more and more important in various applications due to the growing electrification of many areas of life. Ultracapacitors can be easily charged and are able to provide large peak powers for a short amount of time. Thus, ultracapacitors are generally desired, where high power demands need to be met that cannot be met by batteries. The high peak power capability is typically enabled by a low equivalent series resistance (ESR). Typically, the ESR is dependent on the discharge speed such manner that the greater the discharge speed, the greater the ESR and vice versa. As smaller ESR can reduce the thermal load and may also allow extraction of a greater fraction of the stored electrical energy from the ultracapacitor, i.e., a greater amount of the contained energy is usable.

US 8 098 481 B2 discloses a method for manufacturing a double-layer capacitor that combines a high operating reliability and increased power storage capabilities with reduced manufacturing costs. In particular, the welding geometry uses a welding shape length, wherein the start and end point of the welding seam exhibit a length longer than a direct connection between these two points, i.e. any geometry other than a straight line.

EP 4 202 962 A1 discloses different types of weld seams.

It is the object of the invention to improve ultracapacitors, preferably regarding their thermal, electrical and/or mechanical characteristics. The object is achieved by the subject-matter of the independent claims. Preferred embodiments are subject-matter of the dependent claims.

The invention provides a method for welding at least one cell component to an electrode assembly of an energy storage cell, preferably a supercapacitor, the method comprising:
- arranging each cell component and the electrode assembly in contact with each other, wherein each cell component has an exposed welding surface that is accessible for welding by a welding implement;
- moving the welding implement relative to the welding surface to weld each cell component to the electrode assembly by forming a plurality of weld seams on the welding surface, wherein at least two of the formed weld seams are chosen from a group of weld seam types consisting of
   - a transport weld seam that has a main directional component along a radial direction of the electrode assembly; and
   - a collector weld seam that has a main directional component along a circumferential direction of the electrode assembly.

Typically energy storage cells that are included in a module are connected together via busbars. The busbars generally connect to the center hubs of the energy storage cells. The orientation of the transport weld seam is generally such that current is transported towards the center hub. The orientation of the collector weld seam is generally such that current that is extracted from the more radially outward lying electrode assembly layers is collected together before being transported by the transport weld seam. In case of high power demand, i.e., high current, the electrical current can be conducted with less resistance thereby reducing thermal heating during charging and discharging.

Preferably, the transport weld seam has a first end point that has a greater distance from a circumferential surface of the electrode assembly than a second end point that has a smaller distance from the circumferential surface. Preferably, the collector weld seam has a first end point and a second end point that have about the same distance from the circumferential surface. Preferably, the distance is measured along the radial direction. Preferably, the first end point and the second end point are spaced apart along the radial direction with a plurality of electrode layers therebetween. With this configuration, the transport weld seam is mainly oriented in an inward direction from the circumference and the current typically flows across different layers of the electrode assembly. The collector weld seam is mainly oriented along the circumferential direction and the current mainly flows along the same layer of the electrode assembly.

Preferably, the transport weld seam is formed as a straight line or as a circular arc that respectively connects the first and second end points. Preferably, the collector weld seam is formed as a straight line or as a circular arc that respectively connects the first and second end points. Simple geometric shapes such as straight line and circular arc can be formed easier by the welding implement.

Preferably, the electrode assembly is a wound electrode assembly comprising a plurality of electrode layers, wherein the radial direction is substantially perpendicular to the electrode layers and the circumferential direction is substantially tangential to the electrode layers. Preferably, the main current flowing through the transport weld seam flows parallel to the radial direction. Preferably, the main current flowing through the collector weld seam flows parallel to the circumferential direction. The current can be collected more effectively towards the periphery of the electrode assembly and then be conducted towards the center by the transport weld seam, thereby allowing to reduce the ESR.

Preferably, the main directional component is measured by projecting the linear distance between the first and second end points onto the radial direction or the circumferential direction.

Preferably, during welding a plurality of separate transport weld seams is formed that are parallel to each other or that enclose an acute angle. Preferably, during welding a plurality of connected transport weld seams is formed that enclose an acute angle, wherein the transport weld seams are connected at their respective end points.

Preferably, the separate transport weld seams and/or the connected transport weld seams include a first transport weld seam and a second transport weld seam that are arranged to be adjacent along the circumferential direction. Preferably, the first end point of the first transport weld seam has a greater distance from the circumference of the electrode assembly than the first end point of the second transport weld seam. Preferably, the first transport weld seam is longer than the second transport weld seam. Preferably, the second end points of the first and second transport weld seam have roughly the same distance from the circumference.

Preferably, during welding at least one collector weld seam is formed that is connected to at least one weld seam. Preferably, the respective collector weld seam and the respective weld seam are connected at their respective end points.

Preferably, during welding at least one collector weld seam is formed that is connected to at least one transport weld seam and/or at least one collector weld seam. Preferably, the respective collector weld seam and the respective transport weld seam are connected at their respective end points.

Preferably, during welding the weld seams are formed such that a closed contour is formed.

Preferably, the cell component is a current collector disk having a plurality of slits, preferably radial slits, and/or a center hole. Preferably, the welding surface is arranged on the current collector disk and its boundary comprises two adjacent slits, the center hole and/or the outer periphery of the current collector disk.

Preferably, the cell component is a current collector tab having a hub portion and plurality of arms, preferably radial arms, extending therefrom towards the circumference of the electrode assembly. Preferably, the arms include at least one leg that has a greater thickness than the remaining arm and is parallel to the arm. Preferably, the welding surface is arranged on each arm and its boundary comprises the hub portion and/or the legs.

Preferably, the cell component is a cell housing bottom of the energy storage cell. Preferably, the cell housing bottom has a plurality of grooves, preferably radial grooves, and/or a center hub. Preferably, the welding surface is arranged within the grooves and its boundary comprises the sidewalls of the grooves.

Preferably, each transport weld seam has a main directional component that is parallel to any of the slits, the legs, and the grooves. Preferably, each collector weld seam has a main directional component that is perpendicular to any of the slits, the legs, and the grooves.

Preferably, the cell component is a top component and the transport weld seam, in a top view, forms an angle α in the range of 0° ≤ α ≤ 45° relative to a normal on a layer of the electrode assembly, preferably in the range of α ≤ 36°, preferably in the range α ≤ 25°, preferably in the range of α ≤ 15°, preferably in the range of α ≤ 10°, preferably in the range of α ≤ 8°, preferably in the range of α ≤ 6°, preferably in the range of α ≤ 4°, preferably in the range of α ≤ 3°, preferably in the range of α ≤ 2°.

Preferably, the cell component is a bottom component and the transport weld seam, in a bottom view, forms an angle α in the range of 0° ≤ α ≤ 15° relative to a normal on a layer of the electrode assembly, preferably in the range of α ≤ 13°, preferably in the range α ≤ 8°, preferably in the range of α ≤ 5°, preferably in the range of α ≤ 2°.

The invention provides a weld seam arrangement exclusively consisting of the weld seams obtained by welding according to the preferred method.

The invention provides a method for manufacturing an energy storage cell, preferably a supercapacitor, the method comprising:
- providing a cell housing with an open top and a closed bottom;
- inserting into the cell housing an electrode assembly and/or at least one cell component;
- welding the electrode assembly to the cell housing and/or the at least one cell component by carrying out a preferred method;
- wetting the electrode assembly with an electrolyte;
- closing the cell housing.

The invention provides an energy storage cell obtainable by the preferred method.

The invention is based on the insight that the welding seams connecting the current collectors or the cell housing to the wound electrode assembly in energy storage cells have a significant influence on the thermal, electric, and mechanical properties of the cell. In particular, the shape of the welding seam can have a significant influence on both the thermo-electrical properties of the cell, as well as its vibrational properties. For sake of brevity the main focus is spent on the thermo-electrical properties, as typically vibrational considerations can currently be mitigated in a simpler manner.

While the idea is illustrated with reference to cylindrical cells, the skilled person will readily understand that the ideas presented herein may also be applied to prismatic cells or more generally to any cell type, where an electrode assembly is connected via welding seams to the current collectors within the cell housing, or to the cell housing itself.

Typically, the welding seams extend from the center of the electrode assembly radially outwards.

The goal is to find weld seam geometries that enable improved thermo-electrical properties, e.g., lower temperature generated upon cell use and/or reduced ESR (inner resistance).

In energy storage cell typically the uncoated outer parts of the electrode assembly are beaded together on the top and bottom part of the assembly. The electrode assembly itself is typically a wound assembly of two electrodes with an interposed separator. Due to the nature of the wound assembly the peripheral/outer parts of the electrode assembly generally contain more active electrode material per volume than the more inward lying parts.

In some embodiments, a current collector is placed onto the top and/or bottom part of the electrode assembly, respectively. The current collector can be a metal disk or a star-shaped tab or several other geometries as the cell geometry may dictate.

The connection between the electrode and the current collector is established via multiple welding seams. The welding can be performed as several points of spot-welding or the welding seam can exhibit the geometry of a line or circular arc.

It is proposed that the current collectors are connected to the electrode assembly via particular welding seam geometries, which exhibit two key features.

An inner part of welding seam, which extends from the center of the electrode assembly in the direction to the electrode assembly circumference or vice versa, called the transport path or transport weld seam.

An outer part of the welding seam, which predominately covers the peripheral/outer parts of the electrode assembly, called the collector path or collector weld seam.

The transport path preferably covers a direction perpendicular or almost perpendicular to the electrode layers of the electrode assembly. In a top/bottom view, the transport path generally "crosses" the electrode layers.

The collector path may be oriented in a more tangential manner with respect to the orientation of the electrode layers. The angle of the collector path vs. the direction of the wound electrodes is typically smaller than the angle of the transport path vs the direction of the wound electrodes.

Both the transport path as well as the collector path may exhibit several subsections with different orientations and overall shapes/geometries with respect to each other.

One welding seam may exhibit at least one or multiple transport paths and at least one or multiple collector paths.

In one embodiment, in addition to a plurality of welding seams also one or more line weldings may be added (i.e. welding seams extending from the periphery of the electrode assembly towards its center or vice versa, which are welding seems that effectively constitute transport paths).

The technical benefit offered by the welding shape geometries presented herein is to improve thermo-electrical properties of the energy storage cell or electrode assembly-current collector, generally due to a larger surface area covered on the periphery of the electrode assembly. This generally allows that a higher current produced towards the periphery with respect to the center portions of the electrode assembly can be conducted more effectively and with a smaller resistance. In particular, the ESR is reduced, which in turn allows for a reduced amount of heat generated during charging or discharging of the cell, enabling an improved efficiency and a longer lifetime.

Embodiments of the invention are described in more detail with reference to the accompanying schematic drawings that are listed below
Fig. 1 depicts a cross-section of an energy storage cell;
Fig. 2 to
   Fig. 8 depict a view of the energy storage cell illustrating different embodiments of weld seam arrangements;
Fig. 9 to
   Fig. 15 depict a view of the energy storage cell illustrating different embodiments of weld seam arrangements.

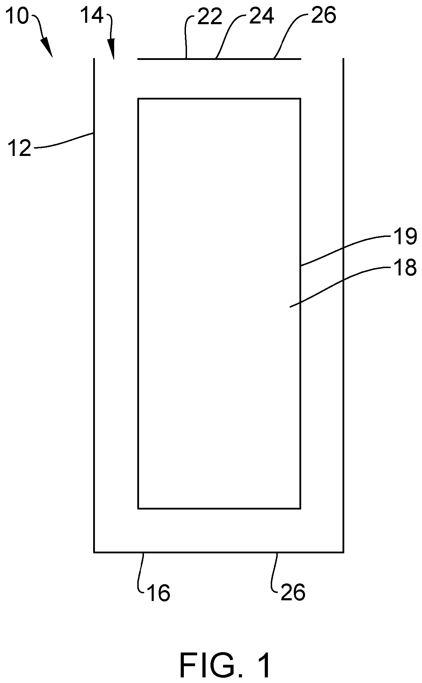

Referring to Fig. 1, an energy storage cell 10 is depicted during welding. The energy storage cell 10 comprises a cell housing 12 (also sometimes called casing or can) that has an open top 14 and a closed bottom 16. The cell housing 12 is preferably cylindrically shaped as a circular cylinder.

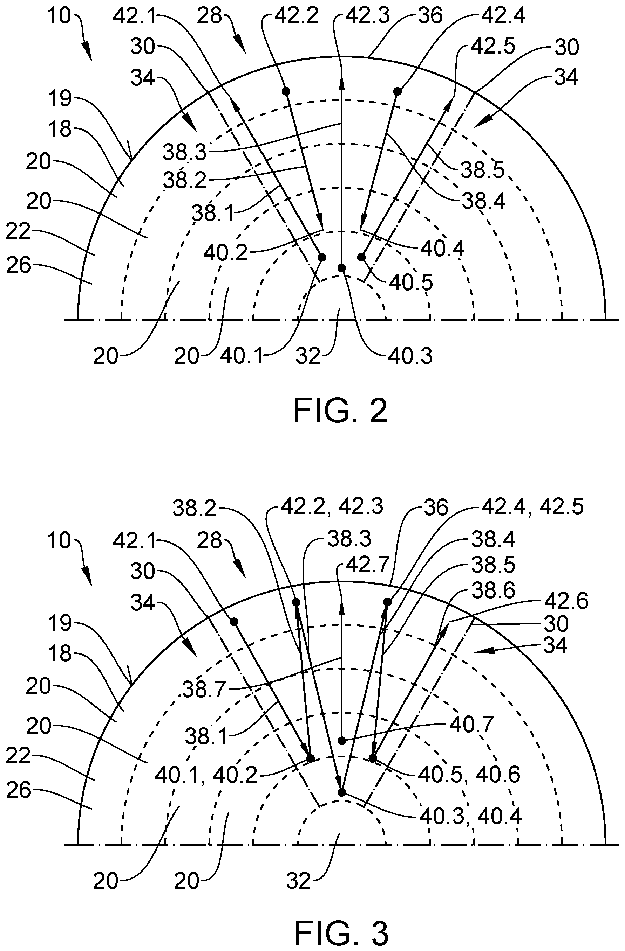

The energy storage cell 10 comprises an electrode assembly 18. The electrode assembly 18 in a manner known per se comprises a plurality of electrode layers 20 (Fig. 2). The electrode layers 20 are composed of a current collector, a separator and active material and are the result of winding, and illustrated by the dotted circles for ease of drawing. It should be noted that in reality the electrode layers 20 are much thinner and form a spiral rather than concentric circles.

The electrode assembly 18 gets welded to the closed bottom 16 and a current collector disk 22 or a current collector tab 24. The closed bottom 16, the current collector disk 22 and the collector tab 24 are examples for a cell component 26.

### Example T1

Referring to Fig. 2, a top-down view illustrates a weld seam arrangement 28 that results from welding the electrode assembly 18 to the current collector disk 22. The current collector disk 22 has a welding surface 30 that is bounded by a disk center 32, adjacent radial slits 34, and a peripheral rim 36.

The weld seam arrangement 28 is formed by moving a weld implement of a welding machine (not shown) relative to the welding surface 30. The weld implement may be a laser system that directs a laser beam onto the welding surface 30. It is also possible that an ultrasonic welding implement is used. Other welding methods are also possible.

The weld seam arrangement 28 comprises a plurality of transport weld seams 38.1, ..., 38.5, collectively referred to as 38. The transport weld seams 38 extend along a radial direction towards a circumference 19 of the electrode assembly 18 between respective first end points 40.1, ..., 40.5 and second end points 42.1, ..., 42.5, collectively referred to as 40 and 42, respectively.

The first end points 40 are further away from the circumference 19 than the second end points 42. The first end points 40 have different distances from the circumference 19 as illustrated in the figure, i.e., the first end point 40.3 is furthest away from the circumference 19 along the radial direction.

The first end points 40.2 and 40.4 are closest to the circumference 19 along the radial direction, but preferably still spaced apart from the circumference 19 more than half-way along the radial direction.

The first end points 40.1 and 40.5 are arranged between the first end points 40.2 and 40.4 and the first end point 40.3 along the radial direction and preferably closer towards the first end point 40.3 along the radial direction.

As illustrated in the figure, the transport weld seams 38 are formed as a straight line between the respective first and second end points 40, 42. At least one pair of transport weld seams 38 encloses an acute angle smaller than or equal to 65°, preferably smaller than or equal to 60°, preferably smaller than or equal to 47°, preferably smaller than or equal to 33°, preferably smaller than or equal to 17°.

At least one pair of transport weld seams 38 that are adjacent along a circumferential direction encloses an acute angle smaller than or equal to 20°, preferably smaller than or equal to 18°, preferably smaller than or equal to 14°.

The transport weld seams 38 are oriented such that they cross the electrode layers 20 nearly perpendicular, e.g., with a maximum deviation of 2°.

The welding can be performed such that the weld implement starts at the first end point 40.1 (as indicated by the circular dot) and moves in a straight line to the second end point 42.1 (as indicated by the small arrow) thereby forming the linear transport weld seam 38.1. Subsequently, welding is interrupted and the weld implement is moved to second end point 42.2 and started again. The weld implement moves in a straight line to the first end point 40.2 thereby forming the transport weld seam 38.2. This process is repeated until the remaining transport weld seams 38.3, ..., 38.5 are formed as indicated in the figure.

This weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.088 mΩ and starting from 0°C a maximum temperature of 34 °C is obtained during transient short circuit conditions.

The transient short circuit conditions are simulated by a current pulse with a predetermined maximum short circuit current. It should be noted that the simulation is done for benchmarking the different weld seam arrangements 28 based on steady-state ESR and maximum temperature. Thus, the obtained values do not necessarily reflect the parameters as they occur in real applications, but are still useful as a qualitative comparison. In other words, it is reasonably assumed that weld seam arrangements 28 achieving lower steady-state ESR and/or lower maximum temperature values in the simulations will also achieve lower steady-state ESR and/or lower maximum temperature values in real applications, and vice versa; even if the simulated values and the real measured values differ from each other completely.

### Example T3

Referring to Fig. 3, a top-down view illustrates a weld seam arrangement 28 that results from welding the electrode assembly 18. The welding process is described insofar as it differs from the previous embodiment.

The weld seam arrangement 28 comprises a plurality of transport weld seams 38.1, ..., 38.7, collectively referred to as 38. The transport weld seams 38 extend along a radial direction towards a circumference 19 of the electrode assembly 18 between respective first end points 40.1, ..., 40.7 and second end points 42.1, ..., 42.7, collectively referred to as 40 and 42, respectively.

The transport weld seams 38.1, ..., 38.6 are directly connected to each other and form a continuous structure. The transport weld seam 38.7 is separate.

The first end points 40 are further away from the circumference 19 than the second end points 42. The first end points 40 have different distances from the circumference 19 as illustrated in the figure, i.e., the first end points 40.3 and 40.4 are furthest away from the circumference 19 along the radial direction and they coincide.

The first end point 40.7 is closest to the circumference 19 along the radial direction. The first end point 40.7 is arranged closer to the disk center 32 than to the circumference 19.

The first end points 40.1, 40.2 and 40.5, 40.6 are arranged between the first end points 40.3 and 40.4 and the first end point 40.7 along the radial direction and preferably closer towards the first end point 40.7 along the radial direction.

As illustrated in the figure, the transport weld seams 38 are formed as a straight line between the respective first and second end points 40, 42. At least one pair of transport weld seams 38 encloses an acute angle smaller than or equal to 65°, preferably smaller than or equal to 58°, preferably smaller than or equal to 43°, preferably smaller than or equal to 33°, preferably smaller than or equal to 25°, preferably smaller than or equal to 17°.

At least one pair of transport weld seams 38 that are adjacent along a circumferential direction encloses an acute angle smaller than or equal to 28°, preferably smaller than or equal to 15°, preferably smaller than or equal to 8°.

The transport weld seams 38 are oriented such that they cross the electrode layers 20 nearly perpendicular, e.g., with a maximum deviation of 8°.

The welding can be performed such that the weld implement starts at the second end point 42.1 and moves in a straight line to the coinciding first end points 40.1 and 40.2 thereby forming the linear transport weld seam 38.1. Without interruption the weld implement is moved to the coinciding second end points 42.2 and 42.3 thereby forming the transport weld seam 38.2. This process is repeated until the remaining transport weld seams 38.3, ..., 38.6 are formed as indicated in the figure.

Finally, the welding is interrupted and the separate transport weld seam 38.7 is formed.

This weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.088 mΩ and starting from 0°C a maximum temperature of 35 °C is obtained during transient short circuit conditions.

### Example T6

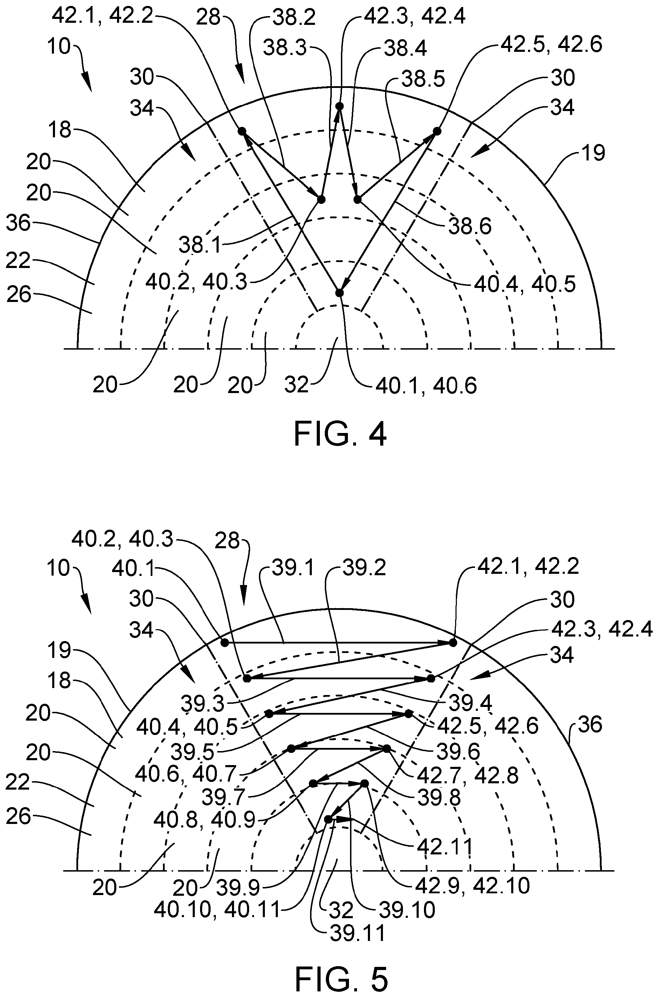

Referring to Fig. 4, a top-down view illustrates a weld seam arrangement 28 that results from welding the electrode assembly 18. The welding process is described insofar as it differs from the previously described embodiments.

The weld seam arrangement 28 comprises a plurality of transport weld seams 38.1, ..., 38.6, collectively referred to as 38. The transport weld seams 38 extend along a radial direction towards a circumference 19 of the electrode assembly 18 between respective first end points 40.1, ..., 40.6 and second end points 42.1, ..., 42.6, collectively referred to as 40 and 42, respectively.

The transport weld seams 38.1, ..., 38.6 are directly connected to each other and form a continuous structure. The transport weld seams 38 form a closed contour on the welding surface 30.

The first end points 40 are further away from the circumference 19 than the second end points 42. The first end points 40 have different distances from the circumference 19 as illustrated in the figure, i.e., the first end points 40.1 and 40.6 are furthest away from the circumference 19 along the radial direction and they coincide.

The first end points 40.2, ..., 40.5 are closest to the circumference 19 along the radial direction. The first end points 40.2, ..., 40.5 are closer to the disk center 32 than the circumference 19.

The first end points 40.2, ..., 40.5 are arranged between the first end points 40.1 and 40.6 and the second end points 42 along the radial direction and preferably closer towards the first end points 40.1 and 40.6 along the radial direction.

As illustrated in the figure, the transport weld seams 38 are formed as a straight line between the respective first and second end points 40, 42. At least one pair of transport weld seams 38 encloses an acute angle smaller than or equal to 65°, preferably smaller than or equal to 60°, preferably smaller than or equal to 45°, preferably smaller than or equal to 25°, preferably smaller than or equal to 17°.

At least one pair of transport weld seams 38 that are adjacent along a circumferential direction encloses an acute angle smaller than or equal to 63°, preferably smaller than or equal to 25°, preferably smaller than or equal to 18°.

The transport weld seams 38 are oriented such that they cross the electrode layers 20 nearly perpendicular, e.g., with a maximum deviation of less than 45°, preferably less than 40°.

The welding can be performed such that the weld implement starts at the first end point 40.1 and moves in a straight line to the coinciding second end points 40.1 and 40.2 thereby forming the linear transport weld seam 38.1. Without interruption the weld implement is moved to the coinciding first end points 40.2 and 40.3 thereby forming the transport weld seam 38.2. This process is repeated until the remaining transport weld seams 38.3, ... , 38.6 are formed as indicated in the figure. The welding is stopped shortly before the first end point 40.6 to avoid double welding of the coinciding first end point 40.1.

This weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.093 mΩ and starting from 0°C a maximum temperature of 74 °C is obtained during transient short circuit conditions.

### Example T2

Referring to Fig. 5, a top-down view illustrates a weld seam arrangement 28 that results from welding the electrode assembly 18. The welding process is described insofar as it differs from the previously described embodiments.

The weld seam arrangement 28 comprises a plurality of collector weld seams 39.1, ..., 39.11, collectively referred to as 39. The collector weld seams 39 extend mainly along a circumferential direction parallel to the circumference 19 of the electrode assembly 18 between respective first end points 40.1, ..., 40.11 and second end points 42.1, ..., 42.11, collectively referred to as 40 and 42, respectively.

The collector weld seams 39.1, ..., 39.11 are directly connected to each other and form a continuous structure.

The first end points 40 and the second end points 42 of each collector weld seam have roughly the same distance from the circumference 19. As illustrated in the figure the first end points 40 and the second end points 42 are aligned along the radial direction in a linear patter, respectively.

With the exception of the outermost and innermost collector weld seams 39.1 and 39.10, the first end points 40 and second end points 42 of radially adjacent collector weld seams 39 coincide.

As illustrated in the figure, the collector weld seams 39 are formed as a straight line between the respective first and second end points 40, 42. At least one pair of collector weld seams 39, preferably adjacent along the radial direction, encloses an acute angle smaller than or equal to 45°, preferably smaller than or equal to 30°, preferably smaller than or equal to 25°, preferably smaller than or equal to 10°, preferably smaller than or equal to 8°. Preferably, the enclosed angle between radially adjacent collector weld seams 39 are identical, with the exception of the innermost and second to innermost collector weld seam 39.9 and 39.10. It is also possible that every other collector weld seams 39 are parallel to each other.

The collector weld seams 39 are oriented tangentially at a point of the electrode layers 20 such that they extend with a main directional component parallel to the circumferential direction, e.g., with a maximum deviation of less than 45°, preferably less than 40°, preferably less than 30°.

The welding can be performed such that the weld implement starts at the first end point 40.1 and moves in a straight line to the coinciding second end points 42.2 and 42.1 thereby forming the linear collector weld seam 39.1. Without interruption the weld implement is moved to the coinciding first end points 40.2 and 40.3 thereby forming the collector weld seam 39.2. This process is repeated until the remaining collector weld seams 39.3, ..., 39.11 are formed as indicated in the figure.

This weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.088 mΩ and starting from 0°C a maximum temperature of 33 °C is obtained during transient short circuit conditions.

### Example T5

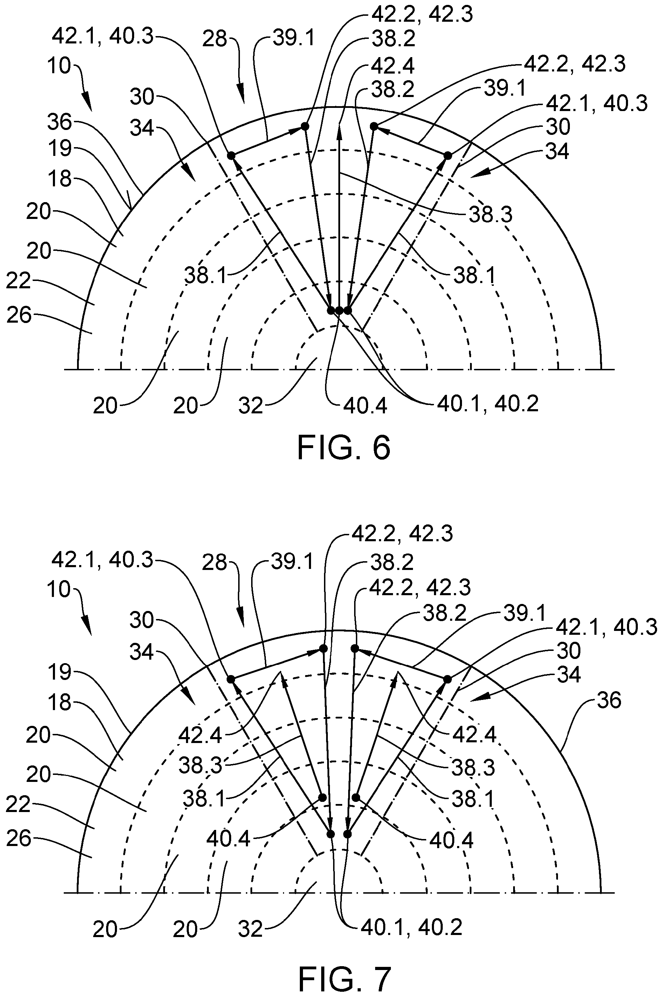

Referring to Fig. 6, a top-down view illustrates a weld seam arrangement 28 that results from welding the electrode assembly 18. The welding process is described insofar as it differs from the previously described embodiments.

The weld seam arrangement 28 comprises a plurality of transport weld seams 38.1, ... 38.3 and a plurality of collector weld seams 39.1. The transport weld seams 38.1 and 38.2 are directly connected to each other and to the collector weld seam 39.1. These transport and collector weld seams 38, 39 form a continuous structure and closed contour. The transport weld seam 38.3 is arranged outside the closed contour and extends in the radial direction.

The first end points 40.1, 40.2 of the transport weld seams 38 are arranged furthest away from the circumference 19. The first end point 40.3 and the second end point 42.3 of the collector weld seam 39.1 are arranged with the same distance from the circumference 19 along the radial direction. The first end point 40.4 and the second end point 42.4 of the transport weld seam 38.3 may have the same distance from the circumference 19 along the radial direction, as the respective first and second end points 40, 42 of the transport weld seam 38.1 and 38.2, and the collector weld seam 39.1.

As illustrated in the figure, the transport and collector weld seams 38, 39 are formed as straight lines between their respective first and second end points 40, 42.

The transport weld seams 38.1 and 38.2 enclose an acute angle smaller than or equal to 35°, preferably smaller than or equal to 30°, preferably smaller than or equal to 20°.

The collector weld seam 39.1 and the directly connected transport weld seam 38.1 or 38.2 enclose an acute angle smaller than or equal to 80°, preferably smaller than or equal to 75°, preferably smaller than or equal to 73°.

The welding can be performed such that the weld implement starts at the first end point 40.1 and moves in a straight line to the coinciding first and second end points 42.1 and 40.3 thereby forming the linear transport weld seam 38.1. Without interruption the weld implement is moved to the coinciding second end points 42.2 and 42.3 thereby forming the collector weld seam 39.1. From there the weld implement is moved to the coinciding first end points 40.1 and 40.2 to form the transport weld seams 38.2.

Finally the separate transport weld seam 38.3 can be formed. The triangular structure can be repeated on the other side of the separate transport weld seam 38.3.

The whole weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.085 mΩ and starting from 0°C a maximum temperature of 24 °C is obtained during transient short circuit conditions.

### Example T4

Referring to Fig. 7, a top-down view illustrates a weld seam arrangement 28 that results from welding the electrode assembly 18. The welding process is described insofar as it differs from Example T5.

The triangular structure is formed as previously described. The main difference is that the separate transport weld seam 38.3 is formed within the closed contour. The triangular structure can be repeated identically within the welding surface 30.

The whole weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.085 mΩ and starting from 0°C a maximum temperature of 22 °C is obtained during transient short circuit conditions.

### Example T7

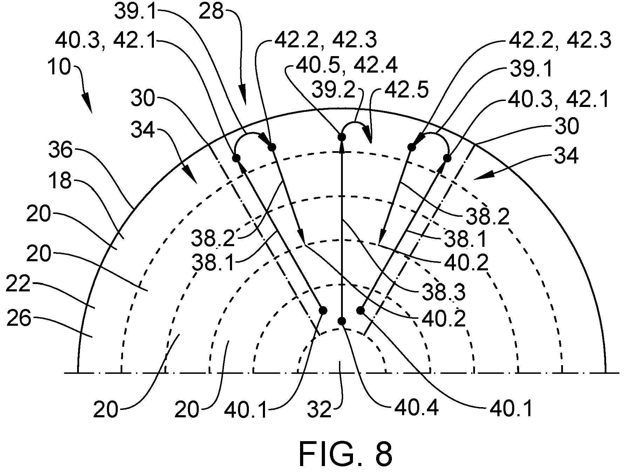

Referring to Fig. 8, a top-down view illustrates a weld seam arrangement 28 that results from welding the electrode assembly 18. The welding process is described insofar as it differs from the previously described embodiments.

The weld seam arrangement 28 comprises a plurality of transport weld seams 38.1, ... 38.3 and a plurality of collector weld seams 39.1 and 39.2. The transport weld seams 38.1 and 38.2 are directly connected to the collector weld seam 39.1, but are not directly connected to each other. These transport and collector weld seams 38, 39 form a continuous structure, but no closed contour. The transport weld seam 38.1 is longer than the transport weld seam 38.2 along the radial direction. The transport weld seam 38.3 is arranged next thereto along the circumferential direction. The transport weld seam 38.3 is directly connected to the collector weld seam 39.2

The transport weld seams 38 are formed as straight lines, whereas the collector weld seams 39 are formed as circular arcs. Similar to example T5 and T4, the

The transport weld seams 38.1 and 38.2 enclose an acute angle smaller than or equal to 35°, preferably smaller than or equal to 30°, preferably smaller than or equal to 20°.

The transport weld seams 38.1 or 38.2 enclose with the transport weld seam 38.3 an acute angle smaller than or equal to 35°, preferably smaller than or equal to 30°.

The collector weld seam 39.1 is tangentially continuous with the transport weld seam 38.1 and 38.2. In other words there is no kink at the coinciding first and end points 40.3 and 42.1. The same is true for the collector weld seam 39.1 and the transport weld seam 38.3.

The welding can be performed such that the weld implement starts at the first end point 40.1 and moves in a straight line to the coinciding first and second end points 42.1 and 40.3 thereby forming the linear transport weld seam 38.1. Without interruption the weld implement is moved along a circular arc to the coinciding second end points 42.2 and 42.3 thereby forming the collector weld seam 39.1. From there the weld implement is moved to the first end points 40.2 to form the transport weld seam 38.2. This arrangement can be redone in a mirrored manner as illustrated in Fig. 8.

Finally, the separate transport weld seam 38.3 and the collector weld seam 39.2 can be formed in a similar manner.

The whole weld seam arrangement 28 can be repeated five more times along the circumferential direction with a small distance between adjacent weld seam arrangements 28. The distance is chosen such that the disk center 32 and the slits 34 are not covered by any weld seam.

Simulations by the inventors show that the steady-state ESR of this weld seam arrangement 28 is about 0.087 mΩ and starting from 0°C a maximum temperature of 31 °C is obtained during transient short circuit conditions.

### Example B1

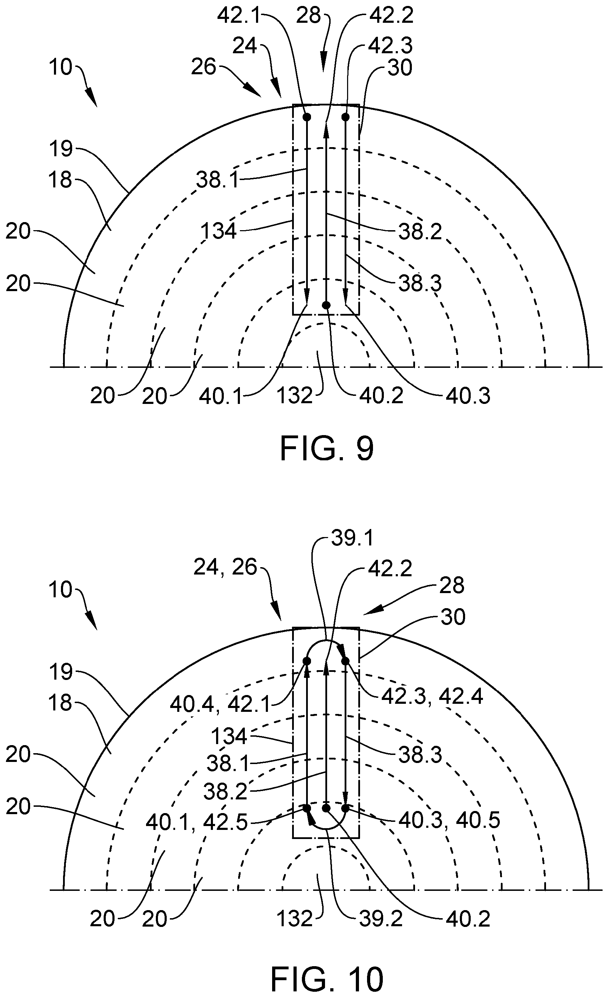

Referring to Fig. 9, the view illustrates a weld seam arrangement 28 that results from welding the electrode assembly 18 to the current collector tab 24 or the cell housing 12. The current collector tab 24 has a welding surface 30 that is bounded by a hub portion 132 and arms 134. The welding surface 30 is roughly rectangular.

The weld seam arrangement 28 is formed by moving a weld implement of a welding machine (not shown) relative to the welding surface 30. The weld implement may be a laser system that directs a laser beam onto the welding surface 30. It is also possible that an ultrasonic welding implement is used. Other welding methods are also possible.

The weld seam arrangement 28 comprises a plurality of transport weld seams 38.1, ..., 38.3, collectively referred to as 38. The transport weld seams 38 extend along a radial direction towards a circumference 19 of the electrode assembly 18 between respective first end points 40.1, ..., 40.3 and second end points 42.1, ..., 42.3, collectively referred to as 40 and 42, respectively.

The first end points 40 are further away from the circumference 19 than the second end points 42. The first end points 40 have different distances from the circumference 19 as illustrated in the figure, i.e., the first end point 40.2 is furthest away from the circumference 19 along the radial direction.

The first end points 40.1 and 40.3 are closest to the circumference 19 along the radial direction, but preferably still near the first end point 40.2.

As illustrated in the figure, the transport weld seams 38 are formed as separate straight parallel lines between the respective first and second end points 40, 42. The transport weld seams 38 deviate less than 2° from parallel relative to each other.

The transport weld seams 38 are oriented such that they cross the electrode layers 20 nearly perpendicular, e.g., with a maximum deviation of 2°.

The welding can be performed such that the weld implement starts at the second end point 42.1 and moves in a straight line to the first end point 40.1 thereby forming the linear transport weld seam 38.1. Subsequently, welding is interrupted and the weld implement is moved to first end point 40.2 and started again. The weld implement moves in a straight line to the second end point 42.2 thereby forming the transport weld seam 38.2. This process is repeated for the transport weld seam 38.3 as indicated in the figure.

This weld seam arrangement 28 can be repeated five more times along the circumferential direction with a distance between adjacent weld seam arrangements 28. The distance is chosen such that the hub portion 132 is not covered by any weld seam and such that the weld seam arrangement 28 is only formed on the structure arms 134.

Simulations by the inventors show that the steady-state ESR of this weld seam arrangement 28 is about 0.099 mΩ and starting from 0°C a maximum temperature of 76 °C is obtained during transient short circuit conditions.

### Example B4

Referring to Fig. 10, this example is identical to Example B1 with the modification that a plurality of collector weld seams 39.1 and 39.2 is formed as circular arcs such that together with the transport weld seams 38.1 and 38.3 a closed contour is formed the transport weld seam 38.2 is arranged within the contour.

Simulations by the inventors show that the steady-state ESR of this weld seam arrangement 28 is about 0.103 mΩ and starting from 0°C a maximum temperature of 102 °C is obtained during transient short circuit conditions.

### Example B7

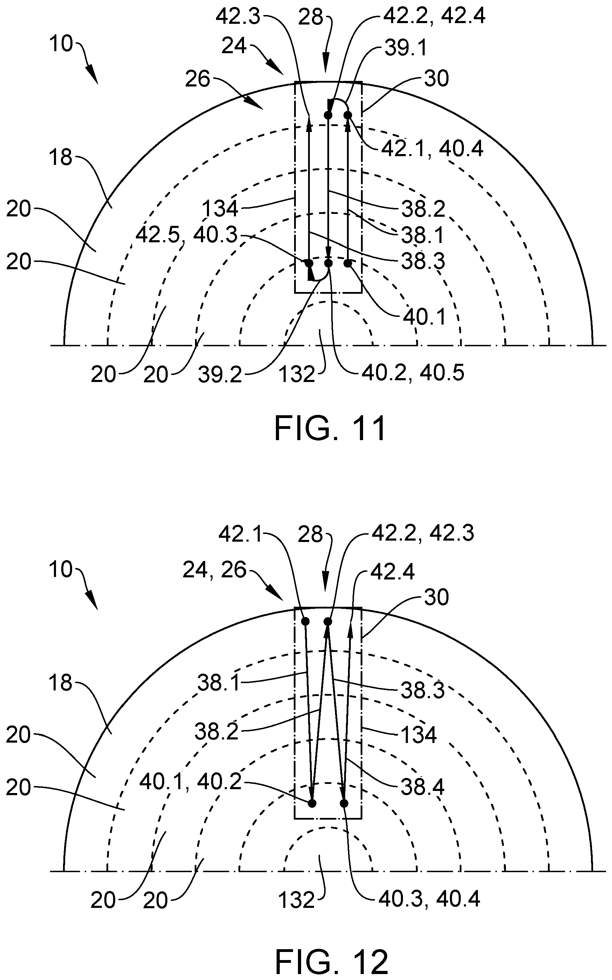

Referring to Fig. 11, this example is identical to Example B4 with the modification that the collector weld seam 39.1 is directly connected to the transport weld seams 38.1 and 38.2 and arranged radially inward from the circumference 19 compared to the collector weld seam 39.2. The collector weld seam 39.2 is directly connected to the transport weld seams 38.2 and 38.3 and arranged radially outward towards the circumference 19 compared to the collector weld seam 39.1.

Simulations by the inventors show that the steady-state ESR of this weld seam arrangement 28 is about 0.10 mΩ and starting from 0°C a maximum temperature of 77 °C is obtained during transient short circuit conditions.

### Example B6

Referring to Fig. 12, the view illustrates a weld seam arrangement 28 that results from welding the electrode assembly 18 to the current collector tab 24 or the cell housing 12. The current collector tab 24 has a welding surface 30 that is bounded by a hub portion 132 and arms 134. The welding surface 30 is roughly rectangular.

The weld seam arrangement 28 comprises a plurality of transport weld seams 38.1, ..., 38.5, collectively referred to as 38. The transport weld seams 38 extend along a radial direction towards a circumference 19 of the electrode assembly 18 between respective first end points 40.1, ..., 40.5 and second end points 42.1, ..., 42.5, collectively referred to as 40 and 42, respectively.

As illustrated in the figure, the transport weld seams 38 are formed as connected straight lines between the respective first and second end points 40, 42.

The transport weld seams 38 are oriented such that they cross the electrode layers 20 nearly perpendicular, e.g., with a maximum deviation of 4°.

The welding can be performed such that the weld implement starts at the second end point 40.1 and moves in a straight line to the coinciding first end points 40.1 and 40.2 thereby forming the linear transport weld seam 38.1. The weld implement further moves in a straight line to the coinciding second end points 42.2 and 42.3 thereby forming the transport weld seam 38.2. This process is repeated for the remaining transport weld seams 38.3, ..., 38.5 as indicated in the figure.

This weld seam arrangement 28 can be repeated five more times along the circumferential direction with a distance between adjacent weld seam arrangements 28. The distance is chosen such that the hub portion 132 is not covered by any weld seam and such that the weld seam arrangement 28 is only formed on the coinciding arms 134.

Simulations by the inventors show that the steady-state ESR of this weld seam arrangement 28 is about 0.098 mΩ and starting from 0°C a maximum temperature of 62 °C is obtained during transient short circuit conditions.

### Example B5

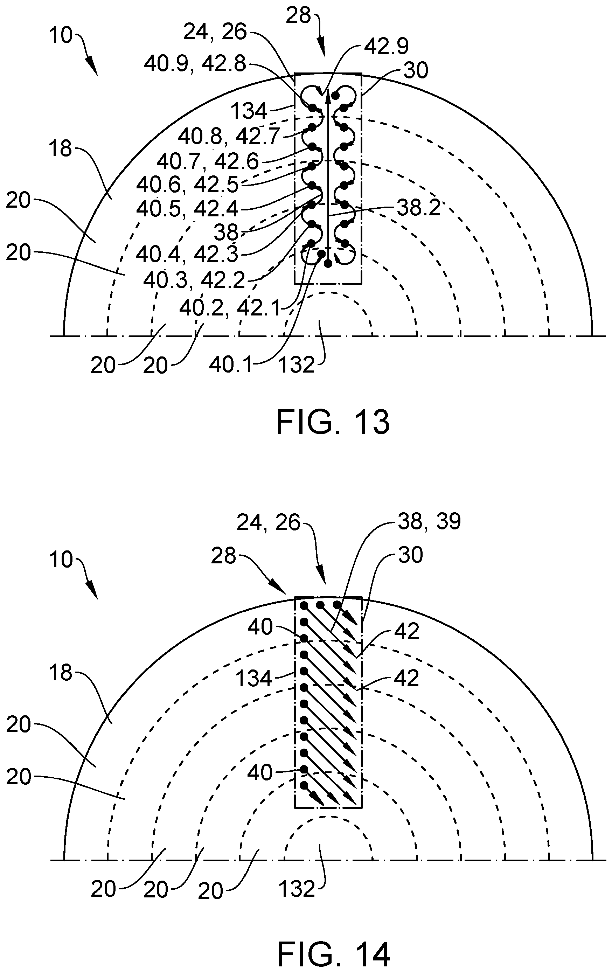

Referring to Fig. 13, the view illustrates a weld seam arrangement 28 that results from welding the electrode assembly 18 to the current collector tab 24 or the cell housing 12. The current collector tab 24 has a welding surface 30 that is bounded by a hub portion 132 and arms 134. The welding surface 30 is roughly rectangular.

The weld seam arrangement 28 comprises a plurality of transport weld seams 38.1, ..., 38.10, collectively referred to as 38. The transport weld seams 38 extend mainly along a radial direction towards a circumference 19 of the electrode assembly 18 between respective first end points 40.1, ..., 40.10 and second end points 42.1, ..., 42.10, collectively referred to as 40 and 42, respectively.

As illustrated in the figure, the transport weld seams 38.1, ..., 38.9 are formed as connected circular arcs between their respective first and second end points 40, 42.

The transport weld seams 38 have a main directional component that crosses the electrode layers 20 nearly perpendicular, e.g., with a maximum deviation of 2°.

The innermost and outermost transport weld seams 38.1, 38.9 are formed as 270° arcs, whereas the transport weld seams 38.2, ..., 38.8 are formed as 180° arcs. The transport weld seam 38.10 is a straight line.

The welding can be performed such that the weld implement starts at the first end point 40.1 and moves along a 270° arc to the coinciding first and second end points 42.1 and 40.2 thereby forming the arc-shaped transport weld seam 38.1. The weld implement further moves along a 180° circular arc to the coinciding first and second end points 42.2 and 40.3 thereby forming the transport weld seam 38.2. This process is repeated for the remaining transport weld seams 38.3, ..., 38.9 as indicated in the figure. This structure can be repeated in a mirrored manner as indicated in the figure.

Finally, the transport weld seam 38.10 can be formed as a straight line.

This weld seam arrangement 28 can be repeated five more times along the circumferential direction with a distance between adjacent weld seam arrangements 28. The distance is chosen such that the hub portion 132 is not covered by any weld seam and such that the weld seam arrangement 28 is only formed on the coinciding arms 134.

Simulations by the inventors show that the steady-state ESR of this weld seam arrangement 28 is about 0.098 mΩ and starting from 0°C a maximum temperature of 66 °C is obtained during transient short circuit conditions.

### Example B2

Referring to Fig. 14, the view illustrates a weld seam arrangement 28 that results from welding the electrode assembly 18 to the current collector tab 24 or the cell housing 12. The current collector tab 24 has a welding surface 30 that is bounded by a hub portion 132 and arms 134. The welding surface 30 is roughly rectangular.

The weld seam arrangement 28 comprises either a plurality of transport weld seams 38 or collector weld seams 39. The transport weld seams 38 extend with an angle of 45° to 47° relative to the circumferential direction between respective first end points 40 and second end points 42, whereas the collector weld seams 39 extend with an angle of 43° to less than 45°.

As illustrated in the figure, the weld seams are formed as separate parallel straight lines between their respective first and second end points 40, 42.

This weld seam arrangement 28 can be repeated five more times along the circumferential direction with a distance between adjacent weld seam arrangements 28. The distance is chosen such that the hub portion 132 is not covered by any weld seam and such that the weld seam arrangement 28 is only formed on the performs arms 134.

Simulations by the inventors show that the steady-state ESR of this weld seam arrangement 28 is about 0.098 mΩ and starting from 0°C a maximum temperature of 66 °C is obtained during transient short circuit conditions.

### Example B3

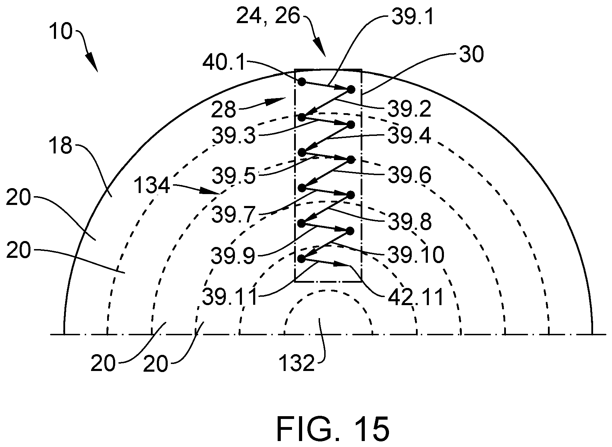

Referring to Fig. 15, the view illustrates a weld seam arrangement 28 that results from welding the electrode assembly 18. The welding process is described insofar as it differs from the previously described embodiments.

The weld seam arrangement 28 comprises a plurality of collector weld seams 39.1, ..., 39.11, collectively referred to as 39. The collector weld seams 39 extend mainly along a circumferential direction parallel to the circumference 19 of the electrode assembly 18 between respective first end points 40.1, ..., 40.11 and second end points 42.1, ..., 42.11, collectively referred to as 40 and 42, respectively.

The collector weld seams 39.1, ..., 39.11 are directly connected to each other and form a continuous structure.

The first end points 40 and the second end points 42 of each collector weld seam have roughly the same distance from the circumference 19, with the second end points 42 being slightly further away from the circumference 19.

As illustrated in the figure the first end points 40 and the second end points 42 are aligned in a linear pattern, respectively.

With the exception of the outermost and innermost collector weld seams 39.1 and 39.11, the first end points 40 and second end points 42 of radially adjacent collector weld seams 39 coincide.

As illustrated in the figure, the collector weld seams 39 are formed as a straight line between the respective first and second end points 40, 42.

At least one pair of collector weld seams 39, preferably adjacent along the radial direction, encloses an acute angle smaller than or equal to 45°, preferably smaller than or equal to 30°, preferably smaller than or equal to 25°, preferably smaller than or equal to 10°, preferably smaller than or equal to 8°. Preferably, the enclosed angle between radially adjacent collector weld seams 39 are identical.

Preferably every other collector weld seams 39 are parallel to each other.

The collector weld seams 39 are oriented tangentially at a point of the electrode layers 20 such that they extend with a main directional component parallel to the circumferential direction, e.g., with a maximum deviation of less than 45°, preferably less than 40°, preferably less than 30°.

The welding can be performed such that the weld implement starts at the first end point 40.1 and moves in a straight line to the coinciding second end points 42.2 and 42.1 thereby forming the linear collector weld seam 39.1. Without interruption the weld implement is moved to the coinciding first end points 40.2 and 40.3 thereby forming the collector weld seam 39.2. This process is repeated until the remaining transport weld seams 38.3, ..., 38.11 are formed as indicated in the figure.

This weld seam arrangement 28 can be repeated five more times along the circumferential direction with a small distance between adjacent weld seam arrangements 28. The distance is chosen such that the hub portion 132 is not covered by any weld seam and such that the weld seam arrangement 28 is only formed on the coincide arms 134.

Simulations by the inventors show that the steady-state ESR of this weld seam arrangement 28 is about 0.10 mΩ and starting from 0°C a maximum temperature of 79 °C is obtained during transient short circuit conditions.

### List of reference signs:

10 energy storage cell
12 cell housing
14 open top
16 closed bottom
18 electrode assembly
19 circumference
20 electrode layer
22 current collector disk
24 current collector tab
26 cell component
28 weld seam arrangement
30 welding surface
32 disk center
34 slit
36 peripheral rim
38 transport weld seam
39 collector weld seam
40 first end point
42 second end point
132 hub portion
134 arm

## Claims

1. A method for welding at least one cell component (26) to an electrode assembly (18) of an energy storage cell (10), preferably a supercapacitor, the method comprising:
- arranging each cell component (26) and the electrode assembly (18) in contact with each other, wherein each cell component (26) has an exposed welding surface (30) that is accessible for welding by a welding implement;
- moving the welding implement relative to the welding surface (30) to weld each cell component (26) to the electrode assembly (18) by forming a plurality of weld seams on the welding surface (30), wherein at least two of the formed weld seams are chosen from a group of weld seam types consisting of
- a transport weld seam that has a main directional component along a radial direction of the electrode assembly (18); and
- a collector weld seam (39) that has a main directional component along a circumferential direction of the electrode assembly (18).

2. The method of claim 1, wherein the transport weld seam has a first end point that has a greater distance from a circumferential surface of the electrode assembly (18) than a second end point that has a smaller distance from the circumferential surface; and/or
wherein the collector weld seam (39) has a first end point and a second end point that have about the same distance from the circumferential surface.

3. The method of any of the preceding claims, wherein the transport weld seam and/or the collector weld seam (39) are formed as a straight line or as a circular arc that connect the first and second end points (40, 42).

4. The method of any of the preceding claims, wherein the electrode assembly (18) is a wound electrode assembly (18) comprising a plurality of electrode layers (20), wherein the radial direction is substantially perpendicular to the electrode layers (20) and the circumferential direction is substantially tangential to the layers.

5. The method of any of the preceding claims, wherein during welding
- a plurality of separate transport weld seams (38) is formed that are parallel to each other or that enclose an acute angle;
- a plurality of connected transport weld seams (38) is formed that enclose an acute angle, wherein the transport weld seams (38) are connected at their respective end points.

6. The method of claim 5, wherein the separate transport weld seams (38) and/or the connected transport weld seams (38) include a first transport weld seam and a second transport weld seam that are arranged to be adjacent along the circumferential direction, wherein the first end point of the first transport weld seam has a greater distance from the circumference (19) of the electrode assembly (18) than the first end point of the second transport weld seam, wherein optionally the first transport weld seam is longer than the second transport weld seam, wherein optionally the second end points (40, 42) of the first and second transport weld seam have roughly the same distance from the circumference (19).

7. The method of any of the preceding claims, wherein during welding
- at least one collector weld seam (39) is formed that is connected to at least one weld seam, wherein the respective collector weld seam (39) and the respective weld seam are connected at their respective end points; and/or
- at least one collector weld seam (39) is formed that is connected to at least one transport weld seam and/or at least one collector weld seam (39), wherein the respective collector weld seam (39) and the respective transport weld seam are connected at their respective end points.

8. The method of any of the preceding claims, wherein during welding the weld seams are formed such that a closed contour is formed.

9. The method of any of the preceding claims, wherein the cell component (26) is current collector disk having a plurality of slits (34), preferably radial slits (34), and/or a center hole, wherein the welding surface (30) is arranged on the current collector disk and its boundary comprises two adjacent slits (34), the center hole and/or the outer periphery of the current collector disk.

10. The method of any of the preceding claims, wherein the cell component (26) is a current collector tab (24) having a hub portion (132) and plurality of arms (134), preferably radial arms (134), extending therefrom towards the circumference (19) of the electrode assembly (18), wherein optionally the arms (134) include at least one leg that has a greater thickness than the remaining arm and is parallel to the arm, wherein the welding surface (30) is arranged on each arm and its boundary comprises the hub portion (132) and/or the legs.

11. The method of any of the preceding claims, wherein the cell component (26) is a cell housing (12) bottom of the energy storage cell (10), wherein the cell housing (12) bottom has a plurality of grooves, preferably radial grooves, and/or a center hub, wherein the welding surface (30) is arranged within the grooves and its boundary comprises the sidewalls of the grooves.

12. The method of any of the claims 9 to 11, wherein each transport weld seam has a main directional component that is parallel to any of the slits (34), the legs, and the grooves; and/or wherein each collector weld seam (39) has a main directional component that is perpendicular to any of the slits (34), the legs, and the grooves.

13. A weld seam arrangement (28) exclusively consisting of the weld seams obtained by welding according to the method of any of the preceding claims.

14. A method for manufacturing an energy storage cell (10), preferably a supercapacitor, the method comprising:
- providing a cell housing (12) with an open top (14) and a closed bottom (16);
- inserting into the cell housing (12) an electrode assembly (18) and/or at least one cell component (26);
- welding the electrode assembly (18) to the cell housing (12) and/or the at least one cell component (26) by carrying out a method of any of the preceding claims;
- wetting the electrode assembly (18) with an electrolyte;
- closing the cell housing (12).

15. An energy storage cell (10) obtainable by the method of claim 14.
